# FASCICULE DE BREVET EUROPEEN

(11) **EP 1 480 805 B1**
(45) Date de publication et mention de la délivrance du brevet: **05.09.2012**
(21) Numéro de dépôt: 03717413.3
(22) Date de dépôt: 18.02.2003
(51) Int. Cl.: B29C 45/14, F21V 17/00

(54) **PROJECTEUR DE PHARE DE VEHICULE AUTOMOBILE COMPRENANT UNE LENTILLE EN VERRE ET UN SUPPORT DE LENTILLE EN MATIERE PLASTIQUE ET PROCEDE DE REALISATION D'UN TEL PROJECTEUR PAR SURMOULAGE DU SUPPORT SUR LA LENTILLE**
KFZ-SCHEINWERFER MIT EINER GLASLINSE UND EINER LINSENHALTERUNG AUS KUNSTSTOFF VERFAHREN ZUR HERSTELLUNG EINER SOLCHEN LINSE DURCH ÜBERGIESSEN DER HALTERUNG ÜBER DER LINSE
PROJECTOR OF THE HEADLIGHTS OF AN AUTOMOTIVE VEHICLE COMPRISING A GLASS LENS AND A PLASTIC LENS SUPPORT AND METHOD OF MAKING SUCH A PROJECTOR BY OVERMOULDING THE SUPPORT ON THE LENS

(30) Priorité: 01.03.2002 FR 0202720
(43) Date de publication de la demande: 01.12.2004
(73) Titulaire: HOLOPHANE, 27700 Les Andelys (FR)
(72) Inventeur: GORAGUER, Daniel, F-76000 Rouen (FR)
(74) Mandataire: CAPRI
(86) Numéro de dépôt international: PCT/FR2003/000535
(87) Numéro de publication internationale: WO 2003/074251

(56) Documents cités:
- EP-A- 0 936 402
- FR-A- 2 630 526
- FR-A- 2 749 062
- US-A- 2 193 935
- US-A- 2 559 860
- US-A- 3 971 841
- US-A- 6 086 231

## Description

La présente invention concerne un projecteur de phare de véhicule automobile dont le but est d'éclairer la route ou la chaussée en avant du véhicule. Et pour créer ce faisceau lumineux, il faut une source de lumière placée dans le projecteur. Cette source de lumière génère de la chaleur, et dans le cas de phare de véhicule automobile, cette chaleur est importante ; il faut donc utiliser des matériaux adaptés résistant à cette chaleur. Ceci est vrai pour tous les types de projecteurs destinés à émettre de la lumière. La présente invention concerne également un procédé de moulage pour mouler le support de lentille.

Le type particulier de projecteur de l'invention comprend un support de lentille en matière plastique monté sur un réflecteur à l'intérieur duquel est placée une source lumineuse, par exemple une ampoule. Le support de lentille connecté au réflecteur sert d'autre part de moyen de support pour supporter une lentille elliptique ou asphérique qui est de préférence réalisée en verre. Conventionnellement, ces lentilles comprennent une face arrière sensiblement plane tournée vers la source lumineuse, c'est à dire l'intérieur du projecteur, et une face avant optique habituellement bombée qui est tournée vers l'extérieur du projecteur. La face arrière peut toutefois être bombée ou présenter une tout autre forme. En outre, ce type de lentille comprend une collerette périphérique qui relie la face avant à la face arrière. Cette collerette périphérique sert dans la plupart des cas d'organe de préhension pour le support de lentille. En d'autre terme, le support de lentille est fixé à la lentille au niveau de la collerette.

La présente invention concerne plus particulièrement le mode de fixation de la lentille de verre sur le support de lentille en matière plastique. Il existe déjà de nombreuses techniques qui sont utilisés pour fixer la lentille sur le support de lentille. Les techniques de fixation les plus connues utilisent le collage, l'encliquetage, le sertissage, ou d'autres systèmes de maintien mécanique à pattes déformables ou à levier pivotant.

Il existe plusieurs inconvénients liés à ces techniques de fixation de l'art antérieur, plus particulièrement lorsqu'il s'agit d'encliquetage, de sertissage ou de système de maintien mécanique. Un premier inconvénient réside dans le fait que la lentille, lorsque réalisée en verre ce qui est aujourd'hui toujours le cas, est relativement fragile et sujette à la cassure lorsqu'elle subit un choc ou une charge trop importante. Ceci est précisément le cas avec les techniques de fixation de l'art antérieur dans lesquelles il est difficile de maîtriser les forces ou pressions générées par l'encliquetage, le sertissage ou les moyens de maintien mécanique. Il en résulte en pratique un taux de casse au montage relativement important. La présente invention a déjà pour but de remédier à cet inconvénient en réduisant considérablement, voire en annulant, le taux de casse de la lentille au montage sur le support de lentille.

Un autre problème lié à la fixation de la lentille sur le support de lentille réside dans le fait que l'épaisseur de la collerette de la lentille peut varier avec une tolérance classique de l'ordre de 3/10 de mm. Etant donné que c'est la face avant optique qui doit être positionnée avec précision par rapport à la source lumineuse en raison de ses caractéristiques techniques, il est très avantageux de prendre référence sur la face avant et/ou sur la partie avant de la collerette entourant la face avant pour positionner la lentille par rapport au support de lentille. Tous les systèmes de fixation dans lesquels la lentille est placée sur le support de lentille au niveau de sa face arrière n'assure pas un bon positionnement de la face avant par rapport à la source lumineuse. Il en résulte une perte des caractéristiques optiques de l'ensemble du projecteur. Par conséquent, la présente invention a également pour but d'assurer un positionnement optique précis de la face avant optique de la lentille par rapport au support de lentille.

Le document FR 2749062 décrit une lentille montée dans un support de lentille à l'aide de vis ou par encliquetage. Une lentille montée d'une seule piece avec un support est également décrite.

Dans un domaine technique éloigné, le document US 3 971 841 décrit un objectif d'appareil photographique comprenant une lentille avec un support de lentille surmonté.

Le document US 2559860 décrit un moule pour contrer des lentilles dans des supports en matiére plastique.

Pour résoudre ces problèmes de l'art antérieur, la présente invention propose que le support soit fixé à la lentille par surmoulage, la matière plastique constitutive du support venant entourer au moins partiellement la collerette de la lentille selon la Rev 1. Grâce à la technique du surmoulage, il est possible de contrôler avec précision et de reproduire de manière automatisée une force de pression constante sur la lentille au moment où le support de lentille va être surmoulé, c'est à dire injecté autour d'une partie au moins de la collerette de la lentille. En outre, il est possible de positionner la lentille dans le moule en prenant référence sur sa face optique et/ou sur la partie de la collerette adjacente à la face optique. De plus, on élimine tous les problèmes liés à la tolérance sur l'épaisseur de la collerette qui est compensée par une épaisseur plus ou moins importante de matière plastique constitutive du support de lentille. Ainsi, il est possible de monter la lentille en verre sur un support de lentille en matière plastique surmoulé de manière totalement automatisée ou robotisée, et ceci avec un taux de casse au montage très réduit, voire nul, tout en garantissant un positionnement parfait de la lentille par rapport au support de lentille.

Avantageusement, la collerette comprend une partie arrière annulaire, qui s'étend avantageusement dans le même plan que la face arrière sensiblement plane, une partie avant annulaire qui s'étend autour de la face avant et une partie de tranche qui relie la partie arrière et la partie avant, le support de lentille venant en contact au moins partiel de la partie arrière et de la partie de tranche de la collerette. Optionnellement, le support de lentille s'étend au moins partiellement sur la partie avant de la collerette. En variante, la partie de tranche de la collerette est chanfreinée, dépouillée ou conique vers la partie avant.

Selon un autre mode de réalisation, il est également possible que la collerette comprenne au moins une encoche de blocage en rotation. Avantageusement, l'encoche est formée dans la partie avant et la partie de tranche sans s'étendre jusqu'à la partie arrière.

La présente invention a également pour objet un procédé de réalisation d'un projecteur de phare de véhicule automobile par surmoulage selon la Rev10. Avantageusement, l'élément de poussée est pourvu d'un système de régulation de la force d'appui sur la face arrière de la lentille pour maintenir la force d'appui à une valeur fixe prédéterminée indépendamment de l'épaisseur de la collerette mesurée entre sa partie avant et sa partie arrière. On garantit ainsi que la lentille est toujours soumise à une valeur de force d'appui constante qui est bien inférieure aux valeurs critiques ou limites auxquelles elle peut se casser mais suffisante pour éviter les infiltrations de plastiques durant le surmoulage. On évite par ce moyen tout risque de casse de la lentille. Avantageusement, l'organe d'appui comprend des moyens de préhension de la face avant de la lentille, avantageusement par aspiration.

Selon une autre caractéristique intéressante de l'invention, l'organe d'appui est formé par un premier élément de moule qui comprend une empreinte destinée à former la partie externe du support de lentille. Avantageusement, l'élément de poussée comprend une partie périphérique d'empreinte destinée à former un bord périphérique interne d'une bride d'appui du support de lentille qui s'étend sous la collerette de la lentille, de sorte qu'une variation d'épaisseur de la collerette de lentille n'affecte que l'épaisseur de la bride d'appui. De préférence, la partie interne du support de lentille est formée par un second élément de moule à l'intérieur duquel l'élément de poussée est monté mobile, le second élément de moule étant mobile par rapport au premier élément de moule, les premiers et seconds éléments de moule formant l'intégralité du support de lentille à l'exception du bord périphérique interne de la bride d'appui formé par l'élément de poussée. Avec un tel procédé de réalisation d'un projecteur de phare de véhicule automobile par surmoulage, on assure un positionnement précis de la lentille puisqu'une partie du moule prend directement appui sur la face avant de la lentille. Ce n'est plus la lentille qui est positionnée par rapport au support de lentille mais au contraire, on peut dire que c'est le support de lentille qui est formé de manière précisément positionnée par rapport à la lentille déjà existante. D'autre part, on peut utiliser grâce à ces techniques de surmoulage des lentilles ayant une collerette présentant une tolérance très importante, puisque tous les écarts d'épaisseur sont automatiquement et entièrement compensés par la matière plastique injectée constitutive du support de lentille.

L'invention sera maintenant plus amplement décrite en référence aux dessins joints donnant à titre d'exemples non limitatifs plusieurs modes de réalisation de l'invention.

Sur les figures :
- la figure 1 est une vue schématique en section transversale à travers un projecteur réalisé selon l'invention,
- la figure 2 représente en section transversale un outil de surmoulage selon une première forme de réalisation,
- la figure 3 est une vue similaire à celle de la figure 2 pour un second mode de réalisation d'un outil de surmoulage, et
- les figures 4a, 4b et 4c sont des vues agrandies d'un détail de l'outil de moulage de la figure 3 pour trois variantes de réalisation respectives.

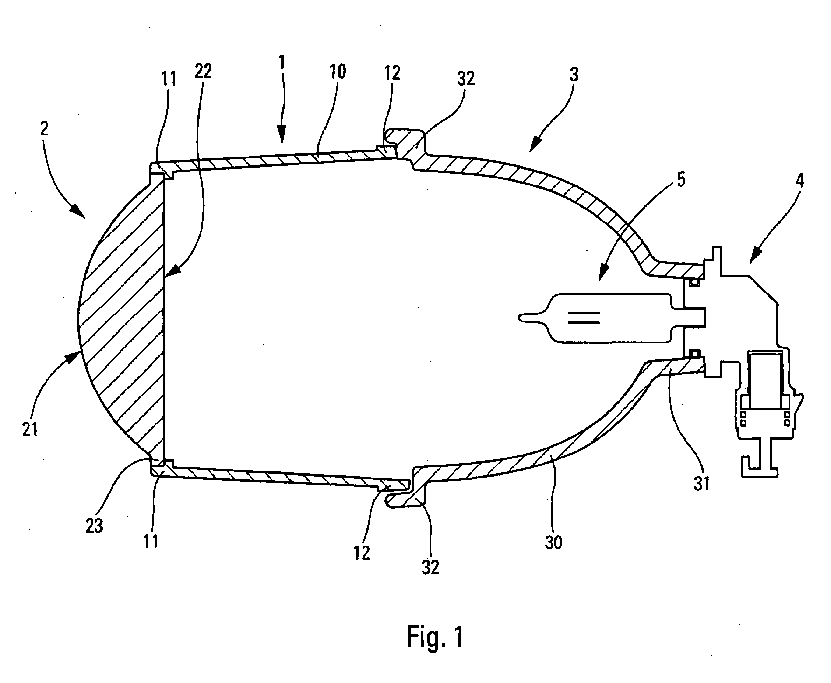

On se référera tout d'abord à la figure 1 qui représente un projecteur plus particulièrement conçu pour être utilisé en tant que projecteur de phare de véhicule automobile. De manière conventionnelle, ce projecteur comprend un réflecteur 3 formant un corps de réflexion 30 définissant un bord périphérique de fixation 32 ainsi qu'une ouverture 31 au niveau de laquelle est monté un porte-lampe 4 équipé d'une ampoule 5 qui est positionnée avec précision à l'intérieur du réflecteur 3. Le réflecteur est de préférence réalisé en verre pour résister aux hautes températures générées par l'ampoule. Ce réflecteur comprend en outre un support de lentille 1 fixé par une de ses extrémités 12 au bord 32 du réflecteur 3. Ce support de lentille 1 comprend également un corps 10 définissant à son extrémité opposée au bord 12 une couronne de fixation 11 à laquelle est fixée une lentille 2. La lentille est positionnée avec précision par rapport à l'ensemble formé par le réflecteur 3 et l'ampoule 5. Le mode de fixation du support de lentille 1 sur le réflecteur 3 n'est pas critique pour la présente invention et peut donc être réalisé à l'aide d'une technique de fixation quelconque.

Selon l'invention, le support de lentille 1 est réalisé en matière plastique, de préférence de manière monobloc. Quant à la lentille 2 elle est réalisée ici en verre, mais elle pourrait également être en une matière plastique appropriée.

Dans la forme de réalisation représentée sur les figures, la lentille de verre 2 comprend une face arrière plane 22 tournée vers l'intérieur du projecteur, c'est à dire vers le réflecteur 3. D'autre part, la lentille de verre 2 comprend une face avant optique ici en forme de dôme 21 qui est tournée vers l'extérieur du projecteur. En outre, la lentille de verre 2 comprend une collerette périphérique 23 qui relie la face arrière 22 à la face avant 21. Il s'agit là d'une configuration tout à fait classique pour une lentille utilisée dans les projecteurs de phares de véhicules. La collerette 23 forme une partie arrière 232 qui est de préférence située dans le même plan que la face arrière 22. En réalité, la partie arrière de la collerette 23 est formée par le bord périphérique externe de la face arrière 22. En outre, la collerette forme une partie de tranche 233 qui s'étend tout autour de la lentille et qui forme par conséquent le bord extérieur de la lentille. La collerette 23 forme également une partie avant 231 qui entoure la face avant 21 en forme de dôme. Avantageusement, la partie avant 231 et la partie arrière 232 sont sensiblement parallèles de sorte que la collerette présente grossièrement une épaisseur sensiblement constante. Toutefois, l'épaisseur de cette collerette ne peut être fabriquée avec une précision extrême : en pratique, la tolérance sur l'épaisseur de la collerette entre sa partie avant 231 et sa partie arrière 232 est généralement et classiquement de l'ordre de 3/ 10 de mm.

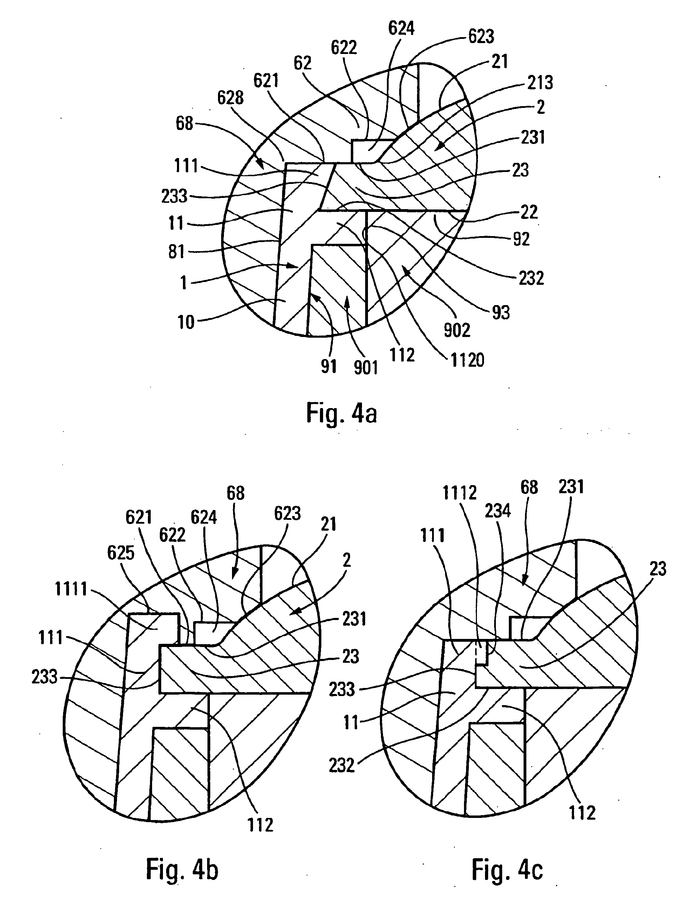

Selon l'invention, la couronne de fixation 11 du support de lentille 1 forme de manière monobloc un collier 111 qui s'étend en contact de et autour de la partie de tranche 233 de la collerette de la lentille 2 et une bride d'appui 112 qui s'étend en contact de la partie arrière 232 de la collerette 23 de la lentille 2. Ceci est visible sur la figure 1, mais de manière bien plus claire sur la figure 4a qui est un agrandissement montrant la lentille et son support de lentille à l'intérieur de l'outil qui sert à leur montage. On peut donc voir sur la figure 4a que la couronne de fixation 11 ne s'étend pas sur la partie avant 231 de la collerette 23. Toutefois, pour assurer un accrochage solide de la lentille sur la couronne de fixation 11, la partie de tranche 233 de la collerette 23 est chanfreinée ou conique de sorte que la partie arrière 232 présente un diamètre plus grand que la partie avant 231. De cette manière, la partie de tranche 233 forme avec la partie arrière 232 un coin saillant qui assure l'accrochage de la collerette dans la couronne de fixation 11.

La collerette 23 est ici circulaire, mais elle peut également être oblongue, elliptique ou polygonale.

En se référant à la figure 4b qui est une variante de la figure 4a, on peut voir que le collier 111 de la couronne de fixation 11 se prolonge sur la partie avant 231 de la collerette 23 par une bride rentrante 1111 qui maintient ainsi la collerette 23 plaquée sur la bride d'appui 112.

Sur la figure 4c, qui représente encore une autre variante, on voit que la collerette 23 est formée avec une encoche 234 qui s'étend ici sur une partie de la tranche 233 ainsi que sur la partie avant 231 de la collerette 23. La partie arrière 232 n'est pas touchée par cette encoche 234. Quant à la couronne de fixation 11, son collier entourant 111 forme un ergot 1112 qui pénètre à l'intérieur de l'encoche 234. Il ne s'agit ici que d'une forme particulière pour l'encoche qui peut très bien s'étendre jusqu'à la partie arrière 232 de la collerette 23. La fonction de cette encoche est de bloquer la lentille en rotation par rapport au support de lentille. En outre, dans la forme de réalisation particulière de la figure 4c, l'ergot 234 joue pour ainsi dire le même rôle que la bride rentrante 1111 de la figure 4b en maintenant la collerette 23 plaquée sur la bride d'appui 112. On peut bien entendu prévoir une ou plusieurs encoche(s) sur la collerette de la lentille. On peut également imaginer une encoche qui s'étend sur la totalité du pourtour de la collerette.

Selon l'invention, les formes particulières de la couronne de fixation 11 du support de lentille représenté sur les figures 4a à 4c sont obtenues par surmoulage du support de lentille 1 sur la lentille 2. Bien entendu, les formes de réalisation des figures 4a à 4c ne doivent pas être considérées comme uniques ni limitatives : d'autres formes peuvent être imaginées et réalisées pour la couronne de fixation 11 par une technique de surmoulage sans pour autant sortir du cadre de l'invention.

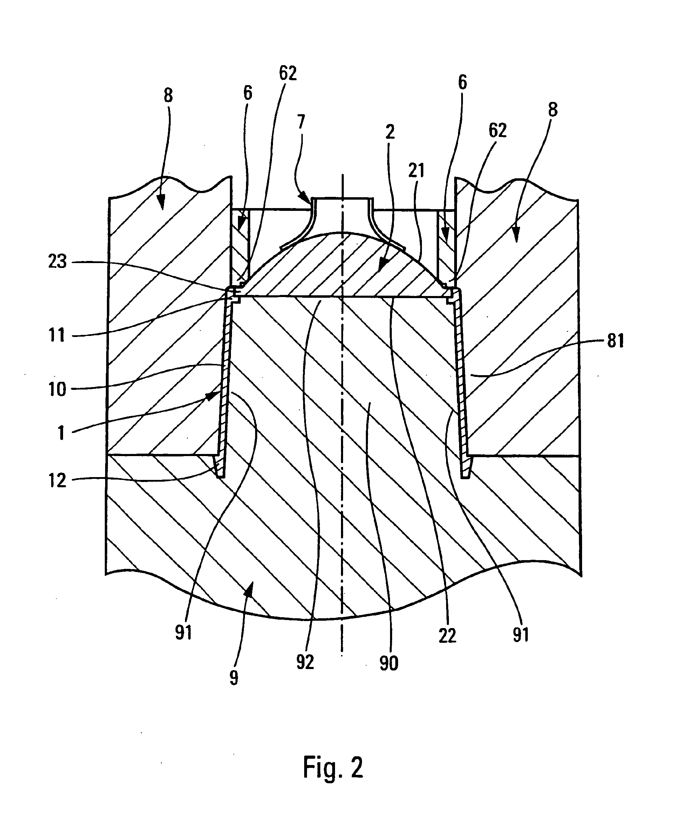

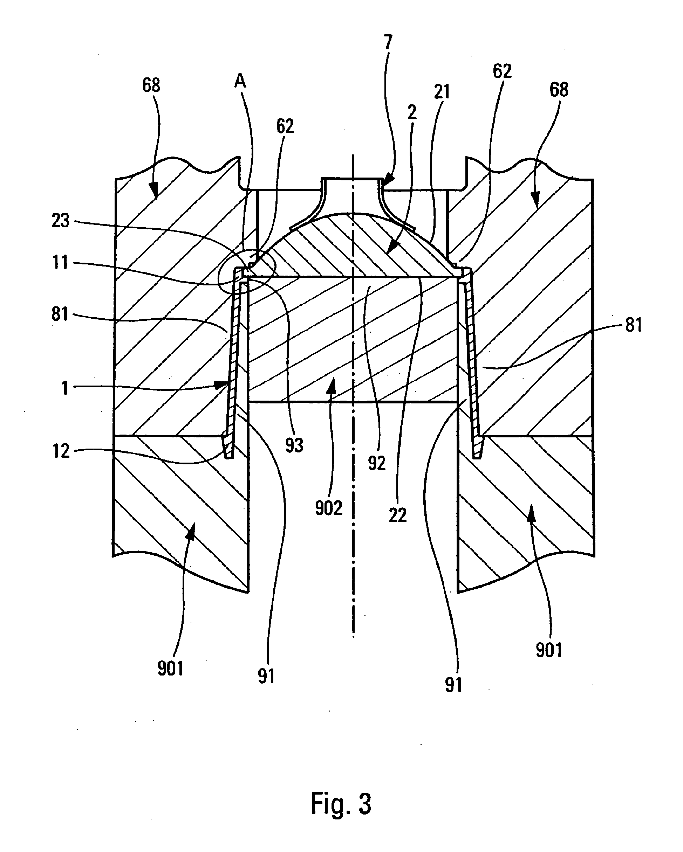

Pour réaliser de telles couronnes de fixation 11, le procédé selon l'invention prévoit également un outil de surmoulage qui est ici décliné en deux versions visibles sur les figures 2 et 3 respectivement. Toutefois, les détails agrandis des figures 4a à 4c sont tirés du mode de réalisation de la figure 3 à l'emplacement désigné par A. En fait, l'outil de moulage selon la figure 3 peut être considéré comme la forme de réalisation préférentielle ou du moins avantageuse.

En se référant à la figure 2, on peut voir que l'outil de moulage de cette première version comprend un premier élément de moule creux 8 qui peut par exemple être fixe. Ce premier élément de moule 8 comprend une empreinte intérieure 81 destinée à former la partie extérieure du support de lentille 1. A ce premier élément de moule fixe 8 est associé un second élément de moule 9 qui forme une broche centrale 90 définissant une empreinte périphérique 91 destinée à former la partie interne du support de lentille 1. En outre, ce second élément de moule 9 forme une surface de poussée 92 destinée à venir en contact de poussée contre la face arrière 22 de la lentille 2. Le second élément de moule 9 est monté mobile par rapport au premier élément de moule fixe 8. En réaction à la poussée exercée par le second élément de moule 9, il est prévu un organe d'appui ou de butée 6 qui forme une zone d'appui 62 qui vient en contact de référence sur la lentille 2 au niveau de sa face avant 21 et/ou de la partie avant 231 de la collerette 23. Une explication plus détaillée sera donnée en référence à la figure 3 ci-après. Cet organe d'appui 6 définit également un bord périphérique externe, ici annulaire, qui définit une partie d'empreinte destinée à former la surface d'extrémité supérieure annulaire de la couronne de fixation 11. Cet organe d'appui 6 est monté mobile par rapport au premier élément de moule fixe 8. En outre, cet organe d'appui 6 peut être pourvu d'un système de préhension de lentille 7 qui peut par exemple se présenter sous la forme d'une ventouse aspirante adaptée à saisir la lentille au niveau du sommet de son dôme formé par la face avant 21 comme on peut le voir sur la figure 2.

Par conséquent, la partie externe du support de lentille est formée par le premier élément de moule 8 en combinaison avec l'organe d'appui 6 alors que la partie interne ainsi que le bord périphérique de fixation 12 du support de lentille 10 sont formés par le second élément de moule mobile 9 dont une fonction supplémentaire est de pousser la lentille contre l'organe d'appui 6 à l'aide de sa surface de poussée 92.

Selon l'invention, il est prévu que le second élément de moule mobile 9 est pourvu d'un système de régulation de la force de poussée permettant d'appliquer à la face arrière 22 de la lentille une poussée constante qui est indépendante de l'épaisseur de la collerette qui peut varier en raison de la tolérance de fabrication. On assure ainsi que la lentille est toujours soumise à une force de pression constante et égale qui est bien entendu fixée à une valeur bien inférieure à celle pouvant causer la casse de la lentille. On assure ainsi un taux de casse nul ou presque nul de la lentille lors du surmoulage. En outre, en prenant appui sur la face avant optique 21 de la lentille qui est la surface de référence optique qu'il faut considérer pour son positionnement par rapport à la source lumineuse, on garantit un positionnement précis et exact de la lentille par rapport au support 1. Toutefois, dans le mode de réalisation de la figure 2, le bord périphérique 12 du support 10 est formé par le second élément de moule mobile 9, ce qui induit une petite imprécision lors du montage s'il existe des différences d'épaisseur de la collerette dues à sa tolérance de 3/10.

Ce problème est résolu par l'outil de moulage représenté sur la figure 3. Dans cette version préférée, l'organe d'appui est formé de manière monobloc ou du moins solidaire avec le premier élément de moule fixe. Ce nouvel élément de moule est désigné par la référence numérique 68 sur la figure 3 pour exprimer la combinaison des éléments 6 et 8 de la figure 2. Cet élément de moule 68 est également fixe et peut également être pourvu d'un système de préhension 7 sous la forme d'une ventouse aspirante. Quant au second élément de moule mobile 9 il est ici divisé en deux de manière à obtenir un élément de moule complémentaire 901 et un élément de poussée 902. On peut dire que l'élément de moule 9 de la figure 2 a été divisé pour différencier la fonction de moule et la fonction de poussée. L'élément de moule complémentaire 901 présente une empreinte 91 qui est avantageusement identique à celle de l'élément de moule 9 de la figure 2, c'est à dire destinée à former la partie interne et le bord de fixation 12 du support de lentille 1. Cet élément de moule complémentaire 901 s'étend jusqu'au niveau de la bride d'appui 112 pour en former sa face inférieure.

Quant à l'élément de poussée 902, il forme également une surface de poussée 92 destinée à venir en contact de poussée avec la face arrière 22 de la lentille 2 afin de la pousser contre les zones d'appui 62 maintenant formées par l'élément de moule 68 et en contact de la lentille 2 au niveau de sa face avant 21 ainsi que de la collerette 23 au niveau de sa partie avant 231. Il faut cependant remarquer que l'organe de poussée 902 forme un anneau périphérique d'empreinte 93 destiné à former le bord périphérique interne sensiblement cylindrique 1120 de la bride d'appui 112 du support de lentille 1. Tout ceci est bien plus visible sur la figure 4a qui est un agrandissement du détail A de la figure 3. On peut y voir que l'élément de moule fixe 68 forme l'empreinte 81 de la partie externe du support de moule 1, l'arrête périphérique supérieure externe au niveau du coin 628, l'extrémité supérieure du collier 111 au niveau de la surface 621. On peut en outre remarquer que cette surface 621 vient en contact avec la partie avant 231 de la collerette 23. Au-delà de cette surface annulaire 621, l'élément de moule 68 définit un évidement 624 formé par un gradin 622. Le but de cet évidement 624 est d'éviter le contact de l'élément de moule 68 avec la partie de jonction 213 qui relie le dôme de la face avant 21 avec la partie avant 231 de la collerette 23 du fait de l'imprécision de sa formation. Cet évidement périphérique 624 permet justement d'éviter un mauvais positionnement de la lentille par rapport à l'élément de moule 68. En outre, l'élément de moule 68 définit un autre anneau d'appui 623 destiné à venir en contact de la face avant 21 en forme de dôme juste après sa jonction 213 avec la partie avant 231. Grâce à ces deux zones de contact de référence, on assure que la lentille est parfaitement positionnée axialement par rapport à l'élément de moule 68. Quant à l'organe de poussée 902, on voit sur la figure 4a qu'il vient en contact de la face arrière 22 avec sa surface de poussée 92. On voit également que sa partie 93 vient former le bord 1120 de la bride d'appui 112. Etant donné que l'organe de poussée 902 est indépendant en déplacement de l'élément de moule complémentaire 901, qui lui, est fixe en position par rapport à l'élément de moule 68 une fois que le moule est fermé, une variation de l'épaisseur de la collerette 23 de la lentille n'a pour effet que d'augmenter ou de diminuer l'épaisseur de la bride d'appui 112, étant donné que la face arrière 22 sera plus ou moins éloignée de l'élément de moule 901 en fonction de son épaisseur. Ceci implique que le bord de fixation 12 du support de lentille est toujours positionné à la même distance de la partie avant 21 de la lentille quelle que soit l'épaisseur de la collerette 23. Ceci n'est pas le cas avec l'outil de surmoulage de la figure 2. Il est même possible avec l'outil de surmoulage de la figure 3 d'utiliser des lentilles ayant une tolérance de fabrication au niveau de l'épaisseur de la collerette 23 qui est supérieure à 3/10 du fait que la bride d'appui 112 compensera automatiquement et intégralement tous ses défauts d'épaisseur.

Tout comme l'élément de moule 9 de la figure 2, l'élément de poussée 902 de l'outil de la figure 3 est également pourvu d'un système de régulation de la force de poussée permettant d'appliquer à la lentille une poussée dont la valeur est prédéterminée et fixe. Ainsi, tout risque de casse lors du surmoulage est évité.

Grâce au procédé selon l'invention, on obtient un sous-ensemble pré-monté lentille support qui présente une grande précision quant au positionnement de la lentille par rapport au bord de fixation 12 du support. De plus, il n'y a pas d'opérations de montage ultérieures de la lentille sur le support, puisque celle-ci est montée en même temps que la fabrication du support. De plus, il n'y a aucun risque de casse de la lentille lors du surmoulage. Etant donné qu'il s'agit d'une technique de surmoulage, cette opération peut être aisément automatisée ou robotisée ce qui garantit une qualité constante et parfaite de l'ensemble pré-monté constitué de la lentille et du support. Enfin, il est possible avec cette technique de surmoulage d'obtenir une parfaite étanchéité de la lentille au niveau de sa collerette. Ceci peut par exemple être avantageux pour les projecteurs utilisés à l'extérieur, par exemple en tant qu'anti-brouillard. Un autre avantage réside dans le fait que la lentille peut être orientée par rapport à son support en utilisant par exemple le mode de réalisation de la figure 4c. L'orientation de la lentille dans l'outil de moulage peut bien entendu être réalisée de manière automatisée.

La matière plastique constitutive du support de lentille est de préférence transparente ou translucide pour permettre une meilleure évacuation de la chaleur générée par la source (ampoule) à l'intérieur du projecteur. Le support de lentille peut également être métallisé.

## Revendications

1. Projecteur de phare de véhicule automobile comprenant un support de lentille (1) et une lentille en verre (2) destinée à être placée devant une source lumineuse (5), ladite lentille étant montée sur le support de lentille qui est solidaire de la source lumineuse, ledit support étant réalisé en matière plastique, ladite lentille comprenant une face arrière (22) destinée à être tournée vers la source lumineuse, une face avant optique (21) et une collerette périphérique (23) qui relie la face arrière et la face avant, le support de lentille venant en prise avec la lentille au niveau de ladite collerette, **caractérisée en ce que** le support (1) est fixé à la lentille (2) par surmoulage, la matière plastique constitutive du support venant entourer au moins partiellement la collerette (23) de la lentille.

2. Projecteur selon la revendication 1, dans lequel la collerette (23) comprend une partie arrière annulaire (232), qui s'étend avantageusement dans le même plan que la face arrière sensiblement plane (22), une partie avant annulaire (231) qui s'étend autour de la face avant (21) et une partie de tranche (233) qui relie la partie arrière et la partie avant, le support de lentille (1) venant en contact au moins partiel de la partie arrière (232) et de la partie de tranche (233) de la collerette (23).

3. Projecteur selon la revendication 2, dans lequel le support de lentille (1) s'étend au moins partiellement sur la partie avant (231) de la collerette (23).

4. Projecteur selon la revendication 2 ou 3, dans lequel la partie de tranche (233) de la collerette est dépouillée vers la partie avant.

5. Projecteur selon l'une quelconque des revendications 2 à 4, dans lequel la collerette (23) comprend au moins une encoche de blocage en rotation (234).

6. Projecteur selon la revendication 5, dans lequel l'encoche (234) est formée dans la partie avant (231) et la partie de tranche (233) sans s'étendre jusqu'à la partie arrière (232).

7. Projecteur de phare de véhicule selon l'une quelconque des revendications précédentes, comprenant un réflecteur (3) dans lequel la source lumineuse (5) est placée, le support de lentille étant fixé au réflecteur.

8. Projecteur selon l'une quelconque des revendications précédentes, dans lequel le support de lentille (1) est réalisé en matériau plastique transparent ou translucide.

9. Projecteur selon l'une quelconque des revendications précédentes, dans lequel le support de lentille (1) est métallisé.

10. Procédé de réalisation d'un projecteur de phare de véhicule automobile par surmoulage d'un support de lentille sur une lentille en verre, ladite lentille comprenant une face arrière (22) destinée à être tournée vers la source lumineuse, une face avant optique (21) et une collerette périphérique (23) qui relie la face arrière et la face avant, le support de lentille venant en prise avec la lentille au niveau de ladite collerette, le procédé utilisant un outil de surmoulage comprenant un organe d'appui (6) destiné à recevoir une lentille (2) sur sa face avant optique (21) en prenant appui de préférence sur une partie avant (231) de la collerette (23) et la face avant (21), et un élément de poussée (9 ; 902) mobile destiné à venir en contact appuyé sur la face arrière (22) de la lentille pour la plaquer sur l'organe d'appui (6), le procédé prevoyant que la matiere constitutive du support entoure au moins partiellement la collerette (23) de la lentille.

11. Procédé selon la revendication 10, dans lequel l'élément de poussée (9 ; 902) est pourvu d'un système de régulation de la force d'appui sur la face arrière (22) de la lentille pour maintenir la force d'appui à une valeur fixe prédéterminée indépendamment de l'épaisseur de la collerette (23) mesurée entre sa partie avant et sa partie arrière.

12. Procédé selon la revendication 10 ou 11, dans lequel l'organe d'appui (6) comprend des moyens de préhension (7) de la face avant de la lentille, avantageusement par aspiration.

13. Procédé selon la revendication 10, 11 ou 12, dans lequel l'organe d'appui (6) est formé par un premier élément de moule qui comprend une empreinte (81) destinée à former la partie externe du support de lentille.

14. Procédé selon l'une quelconque des revendications 10 à 13, dans lequel l'élément de poussée (902) comprend une partie périphérique d'empreinte (93) destinée à former un bord périphérique interne (1120) d'une bride d'appui (112) du support de lentille (1) qui s'étend sous la collerette (23) de la lentille, de sorte qu'une variation d'épaisseur de la collerette de lentille n'affecte que l'épaisseur de la bride d'appui.

15. Procédé selon la revendication 14, dans lequel la partie interne du support de lentille est formée par un second élément de moule (901) à l'intérieur duquel l'élément de poussée (902) est monté mobile, le second élément de moule (901) étant mobile par rapport au premier élément de moule (68), les premiers et seconds éléments de moule formant l'intégralité du support de lentille (1) à l'exception du bord périphérique interne (1120) de la bride d'appui (112) formé par l'élément de poussée (902).

## Claims

1. A motor vehicle headlight lamp including a lens support (1) and a glass lens (2) designed to be placed in front of a light source (5), said lens being assembled to the lens support which is secured to the light source, said support being made of a plastics material, said lens having a rear face (22) designed to face towards the light source, an optical front face (21), and a peripheral rim (23) which interconnects the rear face and the front face, the lens support coming into engagement with the lens at said rim, said lamp being **characterized in that** the support (1) is fixed to the lens (2) by overmolding, the plastics material of which the support is made surrounding the rim (23) of the lens at least in part.

2. A lamp according to claim 1, in which the rim (23) has an annular rear portion (232) which advantageously extends in the same plane as the substantially plane rear face (22), an annular front portion (231) which extends around the front face (21), and an edge portion (233) which interconnects the rear portion and the front portion, the lens support (1) coming into contact, at least in part, with the rear portion (232) and with the edge portion (233) of the rim (23).

3. A lamp according to claim 2, in which the lens support (1) extends over the front portion (231) of the rim (23) at least in part.

4. A lamp according to claim 2 or claim 3, in which the edge portion (233) of the rim tapers towards the front portion.

5. A lamp according to any one of claims 2 to 4, in which the rim (23) is provided with at least one notch (234) for preventing it from moving in rotation.

6. A lamp according to claim 5, in which the notch (234) is formed in the front portion (231) and in the edge portion (233) without extending to the rear portion (232).

7. A vehicle headlight lamp according to any preceding claim, including a reflector (3) in which the light source (5) is placed, the lens support being fixed to the reflector.

8. A lamp according to any preceding claim, in which the lens support (1) is made of a transparent or translucent plastics material.

9. A lamp according to any preceding claim, in which the lens support (1) is metal-plated.

10. A method for producing a motor vehicle headlight lamp in overmolding a lens support over a glass lens, said lens having a rear face (22) designed to face towards the light source, an optical front face (21), and peripheral rim (23) which interconnects the rear face and the front face, the lens support coming into engagement with the lens at said rim, the method using a overmolding tool having an abutment member (6) designed to receive a lens (2) on the optical front face (21) thereof by preferably coming into abutment against a front portion (231) of the rim (23) and against the front face (21), and a moving pusher element (9; 902) designed to come into pressing contact against the rear face (22) of the lens so as to press it against the abutment member (6), the method providing that the constitutive material of the support at least partially surrounds the lens rim (23).

11. A method according to claim 10, in which the pusher element (9; 902) is provided with a force regulation system for regulating the pressing force exerted on the rear face (22) of the lens in order to maintain said pressing force at a predetermined and fixed value independently of the thickness of the rim (23) as measured between its front portion and its rear portion.

12. A method according to claim 10 or claim 11, in which the abutment member (6) has pick-up means (7) for taking hold of the front face of the lens, advantageously by suction.

13. A method according to claim 10, claim 11, or claim 12, in which the abutment member (6) is formed by a first mold element that is provided with a cavity (81) serving to form the outside portion of the lens support.

14. A method according to any one of claims 10 to 13, in which the pusher element (902) is provided with a peripheral cavity insert portion (93) serving to form an inside peripheral edge (1120) of an abutment flange (112) of the lens support (1) which extends under the rim (23) of the lens, so that any variation in the thickness of the rim of the lens does not affect the thickness of the abutment flange.

15. A method according to claim 14, in which the inside portion of the lens support is formed by a second mold element (901) inside which the pusher element (902) is mounted to move, the second mold element (901) being mounted to move relative to the first mold element (68), the first and second mold elements forming the entire lens support (1) except for the inside peripheral edge (1120) of the abutment flange (112) formed by the pusher element (902).

## Patentansprüche

1. Kraftfahrzeugscheinwerfer, aufweisend einen Linsenhalter (1) und eine Glaslinse (2) zum Anordnen vor einer Lichtquelle (5), wobei die Linse auf dem Linsenhalter montiert ist, der mit der Lichtquelle einstückig ist, wobei der Halter aus einem Kunststoffmaterial gefertigt ist, wobei die Linse eine Rückseite (22), die zur Lichtquelle weisen soll, eine optische Vorderseite (21) sowie einen Umfangskragen (23) aufweist, der die Rückseite mit der Vorderseite verbindet, wobei der Linsenhalter auf Höhe des Kragens mit der Linse in Eingriff kommt, **dadurch gekennzeichnet, dass** der Halter (1) durch Überformung an der Linse (2) befestigt ist, wobei das Kunststoffmaterial, das den Halter bildet, den Kragen (23) der Linse zumindest teilweise umgibt.

2. Scheinwerfer nach Anspruch 1, wobei der Kragen (23) ein ringförmiges Rückenteil (232), das sich vorteilhafterweise in der gleichen Ebene erstreckt wie die in etwa ebene Rückseite (22), ein ringförmiges Vorderteil (231), das sich um die Vorderseite (21) erstreckt, sowie ein Randteil (233) aufweist, das das Rückenteil mit dem Vorderteil verbindet, wobei der Linsenhalter (1) zumindest teilweise mit dem Rückenteil (232) und dem Randteil (233) des Kragens (23) in Kontakt kommt.

3. Scheinwerfer nach Anspruch 2, wobei sich der Linsenhalter (1) zumindest teilweise auf dem Vorderteil (231) des Kragens (23) erstreckt.

4. Scheinwerfer nach Anspruch 2 oder 3, wobei das Randteil (233) des Kragens zum Vorderteil hin verjüngt ist.

5. Scheinwerfer nach einem der vorhergehenden Ansprüche 2 bis 4, wobei der Kragen (23) mindestens eine Kerbe zur Drehsperre (234) aufweist.

6. Scheinwerfer nach Anspruch 5, wobei die Kerbe (234) in dem Vorderteil (231) und dem Randteil (233) gebildet ist, ohne dass sie sich bis zum Rückenteil (232) erstreckt.

7. Kraftfahrzeugscheinwerfer nach einem der vorhergehenden Ansprüche, aufweisend einen Reflektor (3), in dem die Lichtquelle (5) angeordnet ist, wobei der Linsenhalter an dem Reflektor befestigt ist.

8. Scheinwerfer nach einem der vorhergehenden Ansprüche, wobei der Linsenhalter (1) aus einem transparenten oder durchscheinenden Kunststoffmaterial gefertigt ist.

9. Scheinwerfer nach einem der vorhergehenden Ansprüche, wobei der Linsenhalter (1) metallisiert ist.

10. Verfahren zur Herstellung eines Kraftfahrzeugscheinwerfers durch Überformung eines Linsenhalters auf einer Glaslinse, wobei die Linse eine Rückseite (22), die zur Lichtquelle weisen soll, eine optische Vorderseite (21) sowie einen Umfangskragen (23) aufweist, der die Rückseite mit der Vorderseite verbindet, wobei der Linsenhalter auf Höhe des Kragens mit der Linse in Eingriff kommt, wobei das Verfahren ein Überformwerkzeug verwendet, das eine Stützeinrichtung (6) zum Aufnehmen einer Linse (2) auf ihrer optischen Vorderseite (21), indem es sich vorzugsweise auf einem Vorderteil (231) des Kragens (23) und der Vorderseite (21) abstützt, und ein mobiles Druckelement (9; 902) aufweist, um mit der Rückseite (22) der Linse in Druckkontakt zu kommen, um diese auf die Stützeinrichtung (6) zu pressen, wobei das Verfahren vorsieht, dass das Material, aus dem der Halter besteht, den Kragen (23) der Linse zumindest teilweise umgibt.

11. Verfahren nach Anspruch 10, wobei das Druckelement (9; 902) mit einem System zur Regelung der auf die Rückseite (22) der Linse wirkenden Druckkraft versehen ist, um die Druckkraft unabhängig von der Dicke des Kragens (23) zwischen seinem Vorderteil und seinem Rückenteil auf einem feststehenden vorbestimmten Wert zu halten.

12. Verfahren nach Anspruch 10 oder 11, wobei die Stützeinrichtung (6) Greifmittel (7), vorteilhafterweise Ansaugmittel, für die Vorderseite der Linse aufweist.

13. Verfahren nach Anspruch 10, 11 oder 12, wobei die Stützeinrichtung (6) durch ein erstes Formelement gebildet ist, das eine Vertiefung (81) zum Bilden des Außenteils des Linsenhalters aufweist.

14. Verfahren nach einem der Ansprüche 10 bis 13, wobei das Druckelement (902) einen umfänglichen Vertiefungsteil (93) zum Bilden eines umfänglichen Innenrands (1120) eines Stützflansches (112) des Linsenhalters (1) aufweist, der sich unter dem Kragen (23) der Linse erstreckt, so dass eine Änderung der Dicke des Kragens der Linse nicht die Dicke des Stützflansches beeinflusst.

15. Verfahren nach Anspruch 14, wobei der Innenteil des Linsenhalters durch ein zweites Formelement (901) gebildet ist, in dessen Inneren das Druckelement (902) mobil montiert ist, wobei das zweite Formelement (901) in Bezug auf das erste Formelement (68) mobil ist, wobei das erste und das zweite Formelement den gesamten Linsenhalter (1) bilden, außer den umfänglichen Innenrand (1120) des Stützflansches (112), der durch das Druckelement (902) gebildet ist.
